# EUROPEAN PATENT APPLICATION

(11) **EP 2 184 603 A1**
(43) Date of publication of application: **12.05.2010**
(21) Application number: 08425710.4
(22) Date of filing: 06.11.2008
(51) Int. Cl.: G01N 29/02, B05B 12/00

(54) **Testing and control device for spray cans**

(71) Applicant: Logomat S.R.L., 40065 Pianoro, Bologna (IT)
(72) Inventor: Simoni, Gian Luca, 40068 San Lazzaro di Savena (Prov. of Bologna) (IT)
(74) Representative: Modiano, Micaela Nadia

(57) **Abstract**

A testing and control device (1) for spray cans (2), comprising a transducer (3) controlled by a respective signal processing unit for analyzing the signal generated by the transducer (3), the transducer (3) facing and being proximate to a dispensing nozzle (6) of the spray can (2) to be tested and acting as a sensor.

## Description

The present invention relates to a testing and control device for spray cans.

The application is aimed at checking the full functionality of the discharge valve in spray cans by testing its flow in terms of intensity and duration.

The defectiveness of a spray can is in fact determined by testing the correct dispensing of the content if a sufficient pressure is applied to such dispensing nozzle (forcing the respective valve open).

Known technologies for performing this test use pressure sensors and/or optical sensors.

The pressure sensors work within a small-volume closed chamber: the dispensing of the content of the can inside the chamber causes an increase in pressure, which is detected by the respective sensors. If the pressure increase (as a function of the duration of the dispensing and of the characteristics of the can being tested) falls within a preset range, the test is deemed to have been passed: the valve manages the dispensing correctly.

Continued execution of tests entails the deposition of the substances atomized at each dispensing from the cans onto the internal walls of the chamber.

This causes a reduction (albeit a minimal one) of the internal volume, with consequent possible modification of the parameters for evaluating the cans being tested and reduced sensitivity of the pressure sensors.

The material deposited on the sensors in fact decreases its sensitivity.

The only way to have reliable operation for this type of test device is to clean the interior of the closed chamber frequently and very accurately.

It should be considered that the substances dispensed by the can are often toxic or partially toxic: it is evident that the operator assigned to cleaning the chamber is therefore exposed to a high risk of contamination, because he/she might inhale or come into contact with the gases and fumes that originate from the deposited material, which the operator has to remove with the cleaning operations. In practice it is unacceptable to subject an operator to this type of risk: in order to eliminate these harmful effects, it would be convenient to provide the operator with protective and safety gear (which is expensive and in any case requires considerable skill in use by the operator in order to ensure effectiveness). Moreover, the productivity losses linked to the downtimes required to perform such cleaning must not be ignored.

Optical sensors instead normally face the region where the spray can being tested performs its dispensing.

They have the undisputed advantage of not requiring a closed chamber: the forced circulation of air needed to remove the substances atomized by the spray cans being tested must be particularly effective, especially in the case of the closed chamber, since it must work according to preset cycles (it cannot work during the test, but must work directly after it, up to the instant that precedes the subsequent test). The management of this kind of recirculation entails substantial equipment costs.

Optical sensors instead require the dispensing to be performed in an open environment (or in a partially open or simply confined environment): the dispensing is read (detected) by the optical sensor as a variation in the transparency of the air. Depending on the extent of this variation, the sensor generates a signal: this signal is interpreted by the management logic to evaluate the operation of the spray can and of its dispensing valve.

The precision of the optical sensor is defined by the quality of the optical measurement that it can perform: after a few dispensings, however, the sensor already bears traces of the deposition of material (the material dispensed by the spray cans being tested) on its detection surface. Therefore, this type of sensor requires very frequent and in-depth maintenance/cleaning to be certain that it is correctly functional.

Further, the optical sensor gives a unique response (YES - NO) and therefore does not allow a quantitative and qualitative assessment of the test.

The aim of the present invention is to provide a testing and control device for spray cans that is adapted to work without requiring any closed chamber.

Within this aim, an object of the present invention is to provide a testing and control device for spray cans that is scarcely sensitive to the accumulation of dirt deposited following the execution of several successive tests.

Another object of the present invention is to provide a testing and control device for spray cans that does not require frequent maintenance and is suitable for automatic cleaning of its surfaces with the goal of maximizing the sensitivity and overall efficiency of the device.

Another object of the present invention is to provide a testing and control device for spray cans that is suitable for performing cleaning and residue removal operations of the automatic type, without the aid of the operator, in order to avoid exposing the operator to risks of intoxication and contamination.

Another object of the present invention is to provide a testing and control device for spray cans that is adapted to reduce line halting downtimes required to clean the residues of previous tests and analyses.

Another object of the present invention is to provide a testing and control device for spray cans that is adapted to work even with spray cans that dispense substances that are corrosive, toxic and contain aggressive chemicals.

Another object of the present invention is to provide a testing and control device for spray cans that has a low cost, is relatively simple to provide in practice and is safe in application.

This aim and these and other objects, which will become better apparent hereinafter, are achieved by the present testing and control device for spray cans, **characterized in that** it comprises a transducer controlled by a respective signal processing unit for analyzing the signal generated by said transducer, said transducer facing and being proximate to the dispensing nozzle of the spray can to be tested and acting as a sensor.

Further characteristics and advantages of the invention will become better apparent from the following detailed description of preferred but not exclusive embodiments of a testing and control device for spray cans, illustrated by way of non-limiting example in the accompanying drawings, wherein:

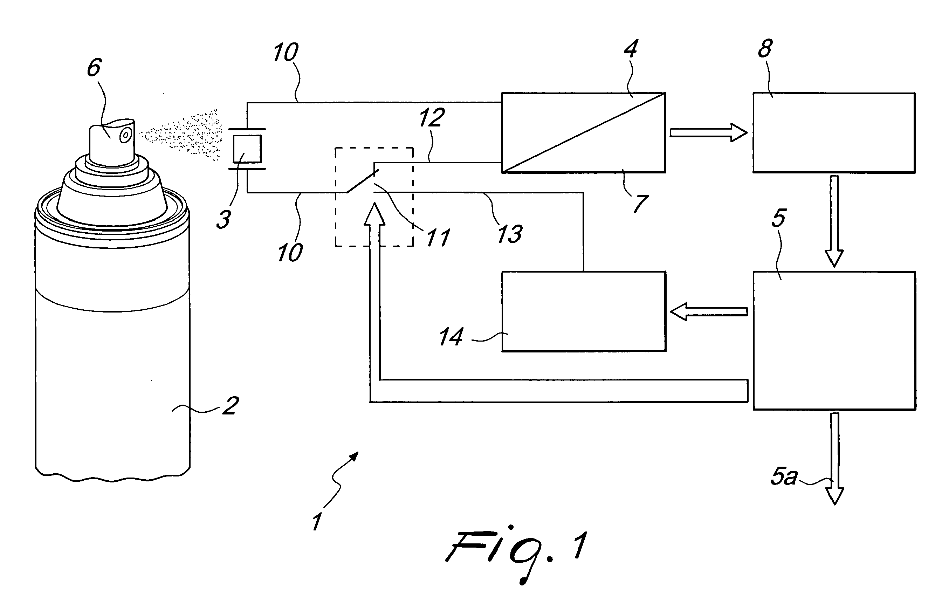

Figure 1 is a schematic view, in the form of a block diagram, of a first embodiment of a testing and control device for spray cans according to the invention;
Figure 2 is a schematic view, in the form of a block diagram, of a second embodiment of a testing and control device for spray cans according to the invention.

With reference to the figures, the reference numeral 1 generally designates a testing and control device for spray cans 2.

The device 1 comprises a transducer 3 of the type adapted to convert a mechanical signal (for example vibrations, pressure waves, intensity of impact of particles on its surface) into a corresponding electrical signal that is proportional to it. In particular, it is noted that it is possible to adopt piezoelectric transducers very effectively. In any case, the possibility is not excluded to adopt a transducer 3 constituted by a membrane that is separated, by means of an open interspace (or an interspace that is closed and contains fluid in predefined chemical and physical conditions), from a respective sensor designed to detect pressure waves and/or vibrations. The membrane, by vibrating (when it is struck by the jet of spray), creates a disturbance (and a train of vibrational waves) in the interspace: this disturbance is detected by the sensor, which produces a signal that is proportional to it. The signals produced by the transducer 3 are sent to a suitable processing unit, which interprets them to evaluate the correct operation of the spray can 2 being tested.

The transducers 3 adapted to be applied in the device 1 according to the invention can be selected (merely by way of example, without any limitation to the adoption of other transducer types) among the various transducers 3 designed to detect pressure waves, vibrations and disturbances and are preferably selected among transducers with sensors of the piezoelectric type, of the strain-gauge type, of the accelerometer type, of the moving coil type, of the moving magnet type and equivalent types.

According to a preferred but not exclusive embodiment, the signal processing unit is constituted by a signal amplifier 4, which is arranged downstream of the transducer 3, and by an actual computer 5, which is arranged downstream of the amplifier 4.

The computer 5 is designed to analyze the signal generated by the transducer 3 and correctly modified by the amplifier 4.

To ensure optimum operation, the transducer 3 must face, and be proximate to, a dispensing nozzle 6 of the spray can 2 to be tested.

To ensure a reliable analysis performed on a signal without noise and alterations, a filter 7 for eliminating any noise may be interposed between the signal amplifier 4 and the computer 5.

In particular, the filter 7 cleans any noise, background "electrical noise" and the like from the waveform of the signal: it is fundamental to note that the filter 7 does not modify the behaviour of the waveform detected by the transducer 3, which remains in practice identical to itself even after filtering and therefore preserves all the qualitative and quantitative information adapted to ensure in-depth analysis of the detected pressure wave, vibration and/or disturbance.

A synchronization circuit 8, normally known as "trigger", is instead interposed between the filter 7 and the computer 5 in order to standardize the test samplings and make them substantially all similar to each other.

The trigger circuit 8 ensures the necessary simultaneity of the start of the process for scanning the signal that arrives from the filter 7 by the computer 5 with the behaviours of the waveform of such signal. In particular, the trigger circuit 8 determines some thresholds of intensity and duration of the signal that are adapted to start the process for scanning such signal that arrives from the filter 7.

The transducer 3 generates an electrical signal when it is struck by the jet dispensed by the spray can 2. This signal is conveniently amplified and filtered by an electronic circuit and is then measured in terms of amplitude and duration, with the possibility to have one or more set points as a function of the requirements of the process. Based on the setting, therefore, it is possible to discriminate between conforming or defective spray cans 2, and this information can be made available at an output 5a of the device 1 in the form of a digital signal. Specifically, it is possible to appreciate (with the test performed by means of the device 1 according to the invention) the correct opening and correct closing of the valve of the spray can 2, as well as the correct duration of the emission and its intensity.

In particular, the device 1, by examining the signal, according to at least one of the following parameters of intensity, duration, frequency and/or according to values that can be calculated, derived or determined starting from these parameters, such as derivative and integrals, is capable of comparing it with corresponding reference parameters of correct operation: the analysis performed is therefore much more in-depth than the one obtainable with known types of detection assembly.

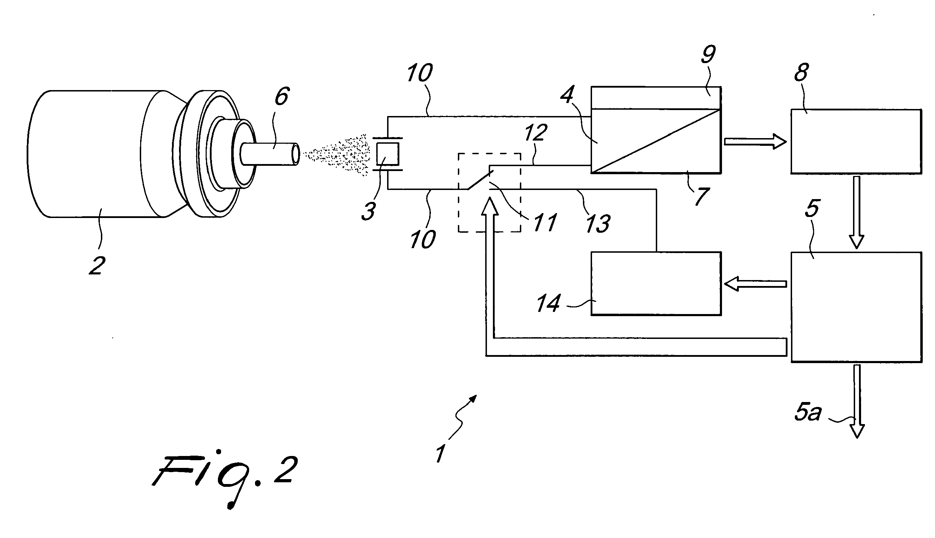

According to a particular embodiment, shown by way of example in Figure 2, the amplifier 4 is controlled by a respective signal source 9 to establish an electrical signal in a circuit 10 for connecting the transducer 3 to the amplifier 4.

Such electrical signal established in the circuit 10 has a frequency and an intensity that are adapted to determine a low-level ultrasonic vibration of the surface of the transducer 3.

The transducer 3 is thus vibrated ultrasonically at a low level by means of an appropriately provided driver circuit (which comprises the source 9). The computer 5 then detects the disturbance of the oscillations generated by the jet dispensed by the spray can 2 on the surface of the transducer 3. The resulting signal, in this case also, is appropriately amplified and filtered by an electronic circuit and then measured in terms of amplitude and duration, with the possibility to have one or more set points as a function of the requirements of the process.

According to an embodiment of particular practical and functional interest, the device 1 comprises an electrical switch 11 for disconnecting a branch 12 of the circuit 10 for connecting the transducer 3 to the signal amplifier 4 and for connecting it to an auxiliary circuit 13 provided with an auxiliary source 14, driven by the computer 5.

The signal delivered by the auxiliary source 14 is of the type adapted to determine a corresponding and preferably ultrasonic vibration of the surface of the transducer 3.

Since the piezo-ceramic plate (or any other sensor among the sensors cited earlier or another type of sensor having substantially equivalent functions) per se has a reversible effect, if it is driven appropriately at preferably ultrasonic frequencies, it is capable of vibrating, vaporizing or atomizing instantly residues of the liquid type, solutions or suspensions deposited on its surface. By utilizing this reversibility, a self-cleaning sensor/transducer 3 is thus obtained which in one step performs its measurement function and in another step frees itself of the residues of product produced by dispensing on the part of the spray can 2.

An ultrasonic vibration is preferred for two reasons: first of all, the high frequency ensures better removal of material (as a consequence of a mechanical ablation and/or atomization effect) with respect to lower frequencies; moreover, ultrasonic vibrations are not detected by the human ear, and for this reason the operations for cleaning the transducer 3 are not inconvenient or harmful for the operators assigned to managing the device 1.

In practical application on an automatic machine, the cleaning step can occur according to the requirements at each cycle, after every preset number of cycles, in an appropriately provided vacuum step, both when the machine is stopped and when the machine is running.

The device 1 can comprise a dispenser of fluidifying and/or detergent substances which faces and is proximate to the surface of the transducer 3.

The dispensing of fluidifying and/or detergent substance can be combined conveniently with the triggering of vibrations of the transducer 3 produced by the auxiliary source 14, in order to combine the chemical cleaning effect of the detergent with the mechanical cleaning effect of the vibrations.

To have a higher cleaning effectiveness in the case of substances with a particularly dense residue, it is in fact possible to apply to the surface of the transducer 3 a drop of water or generic fluid in order to facilitate atomization and/or ablation.

Since the principle of the expulsion of the residue is high-frequency mechanical vibration, accordingly it can be applied for any type of product, even if it is oily or viscous.

The sensor/transducer 3 is constituted by a plate of piezo-ceramic material with a suitable coating of a material that is refractory to chemical agents.

Such plate generates an electrical signal when it is struck by the jet of the spray can 2.

The testing and checking method for spray cans according to the invention consists in dispensing, in a first step and for a predefined time, the substance contained in the spray can 2 through its nozzle 6 onto the surface of the pressure wave transducer 3.

In a second step it is necessary to examine the signal, according to at least one of the following parameters of intensity and duration and according to values that can be calculated, derived or determined starting from such parameters, such as derivatives and integrals, comparing such signal with corresponding reference parameters of correct operation.

In particular, it is noted that it is convenient to perform a check of the integral type: by plotting in a chart the intensity of the signal (on the axis of ordinates) as a function of time (on the axis of abscissae), it is possible to find that the area of such chart that corresponds to a correct dispensing of product by the spray can 2 is defined according to clearly defined parameters. It is thus possible to "measure" this chart area (which is equal to the integral of the intensity of the signal in the time interval of the duration of such signal) with the transducer 3 and a suitable circuit for processing the emitted signal, in order to make comparisons between the measured value and the ideal parameters (for example by adopting a reference interval that corresponds to a correct operation of the dispensing by the spray can 2).

Finally, evaluation occurs during a third step, in which it is possible to validate the spray can 2 being considered if the signal related to it falls within the corresponding reference parameters of correct operation.

With reference to the embodiment described and shown in Figure 2, it is necessary to provide a fourth step in which preferably ultrasonic vibrations of the surface of the transducer 3 are generated by means of an electrical signal supplied across the transducer 3 by an appropriate signal source 9 before the first step is started.

It is then convenient to perform the second step according to the teachings of a fifth "sub"-step, in which the variations of the detected signal with respect to the signal provided by the signal source 9 must be analyzed.

To ensure the correct operation of the device 1, there is also a sixth step, during which it is necessary to supply the terminals of the transducer 3 with an electrical signal that is adapted to trigger vibrations, even of the ultrasonic type, of the surface of the transducer 3 for the ablation of the debris accumulated thereon.

Advantageously, the device 1 according to the invention is of the self-cleaning type and therefore minimizes the risks of exposure of the operators assigned to its operation to toxic and/or contaminating substances.

Positively, the device 1 according to the invention is particularly safe and reliable (the automation of the cleaning action ensures its optimum operation even after a very large number of operating cycles): this provides the purchasers of the spray cans 2 with assurance of their correct operation.

It is noted in fact that the testing of spray cans 2 designed to dispense medical substances (for example life-saving drugs and anti-asthma drugs) is intended to ensure the operation of the spray can 2 when the patient needs it.

The device 1 according to the invention, in combination with its process for use, allows to access a more in-depth analysis of the acquired data (related to the characteristics of the pressure wave, vibration, disturbance), with a more complete view of the results of the test.

It is important to note that the device 1 according to the invention can operate individually and/or in combination with other known types of acquisition assembly in order to combine the information that can be obtained from both so as to produce ever more complete and complex analyses.

It has thus been shown that the invention has achieved the proposed aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A testing and control device (1) for spray cans (2), **characterized in that** it comprises a transducer (3) controlled by a respective signal processing unit for analyzing the signal generated by said transducer (3), said transducer (3) facing and being proximate to a dispensing nozzle (6) of the spray can (2) to be tested and acting as a sensor.

2. The device according to claim 1, **characterized in that** said transducer (3) is designed to detect pressure waves, vibrations and disturbances and is preferably selected among transducers with sensors of the piezoelectric type, of the strain-gauge type, of the accelerometer type, of the moving coil type, of the moving magnet type, and of equivalent types.

3. The device according to claim 1, **characterized in that** said transducer (3) comprises a suitable membrane, which faces and is proximate to the dispensing nozzle (6) of said spray can (2), and a sensor, of the type designed to detect pressure waves, vibrations and disturbances, arranged proximate to said membrane and separated from it by means of an interspace of predefined size.

4. The device according to claim 1, **characterized in that** said processing unit comprises a signal amplifier (4) and a computer (5), between said signal amplifier (4) and said computer (5) there being a filter (7) for cleaning the waveform of the signal of any noise, background "electrical noise" and the like, said filter (7) not modifying the behaviour of the waveform acquired by the transducer (3).

5. The device according to claim 4, **characterized in that** a synchronization circuit (8) is arranged between said filter (7) and said computer (5) to determine suitable thresholds of signal intensity and duration of the start of the process for the scanning of said signal that originates from the filter (7) on the part of the computer (5), with the behaviours of the waveform of said signal.

6. The device according to claim 4, **characterized in that** said amplifier (4) is controlled by a respective signal source (9) to establish an electrical signal in a circuit (10) for connecting the transducer (3) to the amplifier (4), said signal having a frequency and an intensity that are adapted to determine a low-level ultrasonic vibration of the surface of said transducer (3).

7. The device according to one or more of the preceding claims, **characterized in that** it comprises an electrical switch (11) for disconnecting a branch (12) of the circuit (10) for connecting the transducer (3) to the signal amplifier (4) and for connecting said branch (12) to an auxiliary circuit (13) provided with an auxiliary source (14) driven by said computer (5), the signal emitted by said auxiliary source (14) being of a type and power level that are adapted to determine a broad and preferably ultrasonic vibration of the surface of said transducer (3), the triggering of vibrations of the transducer (3) produced by the auxiliary source (14) causing the ablation and/or vaporization of the residues that are present on the surface of said transducer (3).

8. The device according to the preceding claim, **characterized in that** it comprises a dispenser of detergent substances, which faces and is proximate to the surface of said transducer (3), the dispensing of detergent substance being associated with the triggering of vibrations of the transducer (3) produced by the auxiliary source (14), to combine the chemical cleaning effect of the detergent with the mechanical cleaning effect of the vibrations.

9. The device according to one or more of the preceding claims, **characterized in that** said transducer (3) comprises a coating made of a material that is refractory to chemical agents, said transducer (3) generating an electrical signal when it is struck by the pressure wave, vibration, disturbance of the jet of the spray can (2).

10. A testing and control method for spray cans, which comprises the steps of:
a) dispensing a substance contained in a spray can (2) through its nozzle (6) onto the surface of a transducer (3) of pressure waves, vibrations and disturbances;
b) examining the signal, according to at least one of the parameters of intensity and duration and according to values that can be calculated, derived or determined starting from said parameters, such as derivatives and integrals, comparing said signal with corresponding reference parameters of correct operation;
c) validating the spray can (2) being considered if the signal related to it falls within the corresponding reference parameters of correct operation.

11. The method according to claim 10, which comprises the steps of:
d) generating vibrations of the surface of the transducer (3) by means of an electrical signal supplied at the terminals of said transducer by a signal source (9) before said step a);
e) performing step b), analyzing the variations of the acquired signal with respect to the signal provided by said signal source (9).

12. The method according to claim 10, which comprises the step of:
f) supplying the terminals of said transducer (3) with an electrical signal that is adapted to trigger vibrations, even of an ultrasonic type, of the surface of the transducer (3) for the ablation of the debris accumulated on said transducer.
